# EUROPEAN PATENT SPECIFICATION

(11) **EP 4 642 851 B1**
(45) Date of publication and mention of the grant of the patent: **02.12.2026**
(21) Application number: 23848743.3
(22) Date of filing: 27.12.2023
(51) Int. Cl.: C08L 23/10

(54) **GLASS REINFORCED THERMOPLASTIC MATERIAL**
GLASVERSTÄRKTES THERMOPLASTISCHES MATERIAL
MATÉRIAU THERMOPLASTIQUE RENFORCÉ PAR DU VERRE

(30) Priority: 30.12.2022 US 202263436207 P
(43) Date of publication of application: 05.11.2025
(73) Proprietor: Avient Corporation, Avon Lake, Ohio 44012 (US)
(72) Inventor: SWANSON, John, Avon Lake, Ohio 44012 (US); KLUG, Jennifer, Avon Lake, Ohio 44012 (US); DUAN, Yannan, Avon Lake, Ohio 44012 (US); SILVA, Italo, Avon Lake, Ohio 44012 (US); METAXAS, Athena, Avon Lake, Ohio 44012 (US)
(74) Representative: Appleyard Lees IP LLP
(86) International application number: PCT/US2023/086033
(87) International publication number: WO 2024/145353

(56) References cited:
- CN-A- 109 456 534
- CN-A- 111 117 152

## Description

### TECHNICAL FIELD

Embodiments of the present disclosure are generally related to glass reinforced thermoplastic material, and are specifically related to glass fiber reinforced thermoplastic materials including a polymer matrix comprising a polyvinyl butyral component, a polyolefin component, and a maleic anhydride-functional compatibilizer.

### BACKGROUND

Glass fiber reinforced thermoplastic materials including a polyolefin (e.g., polypropylene) are widely used in automotive, appliance, furniture and electrical applications due to desirable mechanical properties (e.g., flexural modulus and strength). However, there is a growing demand for glass fiber reinforced thermoplastic materials with improved performance attributes (e.g., surface properties) and enhanced sustainability.

CN 109456534 A relates to a polypropylene material resistant to high temperature creep and a preparation method thereof. The high temperature creep resistant polypropylene material comprises, by weight, 60-80 parts of polypropylene, 3-13 parts of polyvinyl butyral resin, 5-11 parts of glass fibers, and various other components.

CN111117152A relates to high-strength composite glass fiber reinforced plastics and a preparation process thereof. The high-strength composite glass fiber reinforced plastics comprise by weight 18-28 parts HPDE, 20-35 parts of glass fibers, 0.5-2 parts of polyvinyl butyral, and various other components.

Accordingly, a need exists for glass fiber reinforced thermoplastic materials with consistent mechanical properties (i.e., flexural modulus and strength) and increased surface energy. It is also desirable to include components from recycled sources.

### SUMMARY

Embodiments of the present disclosure are directed to glass fiber reinforced thermoplastic materials including a polymer matrix comprising a polyvinyl butyral component, a polyolefin component, and a maleic anhydride-functional compatibilizer.

According to one embodiment, a glass fiber reinforced thermoplastic material is provided. The glass reinforced thermoplastic material comprises a polymer matrix and 10 wt% to 40 wt% of a glass reinforcement, based on a total weight of the glass reinforced thermoplastic material. The polymer matrix comprises, based on a total weight of the polymer matrix, 20 wt% to 50 wt% of a polyvinyl butyral component, 45 wt% to 80 wt% of a polyolefin component, and 0.5 wt% to 9 wt% of a maleic anhydride-functional compatibilizer. The polyolefin component comprises polyethylene, polypropylene, or a combination thereof. The maleic anhydride-functional compatibilizer comprises maleic anhydride grafted polypropylene, maleic anhydride grafted polyethylene, or a combination thereof.

Additional features and advantages of the embodiments described herein will be set forth in the detailed description which follows, and in part will be readily apparent to those skilled in the art from that description or recognized by practicing the embodiments described herein, including the detailed description, which follows and the claims.

### DETAILED DESCRIPTION

Reference will now be made in detail to various embodiments of glass reinforced thermoplastic materials, specifically glass reinforced thermoplastic material comprising a polymer matrix and 10 wt% to 40 wt% of a glass reinforcement, based on a total weight of the glass reinforced thermoplastic material. The polymer matrix comprises, based on a total weight of the polymer matrix, 20 wt% to 50 wt% of a polyvinyl butyral component, 45 wt% to 80 wt% of a polyolefin component, and 0.5 wt% to 9 wt% of a maleic anhydride-functional compatibilizer. The polyolefin component comprises polyethylene, polypropylene, or a combination thereof. The maleic anhydride-functional compatibilizer comprises maleic anhydride grafted polypropylene, maleic anhydride grafted polyethylene, or a combination thereof.

The disclosure should not be construed as limited to the embodiments set forth herein. Rather, these embodiments are provided so that this disclosure will be thorough and complete, and will fully convey the subject matter to those skilled in the art.

### Definitions

Unless otherwise defined, all technical and scientific terms used herein have the same meaning as commonly understood by one of ordinary skill in the art. The terminology used in the disclosure herein is for describing particular embodiments only and is not intended to be limiting.

Ranges may be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

Unless otherwise expressly stated, it is in no way intended that any method set forth herein be construed as requiring that its steps be performed in a specific order, nor that with any apparatus specific orientations be required. Accordingly, where a method claim does not actually recite an order to be followed by its steps, or that any apparatus claim does not actually recite an order or orientation to individual components, or it is not otherwise specifically stated in the claims or description that the steps are to be limited to a specific order, or that a specific order or orientation to components of an apparatus is not recited, it is in no way intended that an order or orientation be inferred, in any respect. This holds for any possible non-express basis for interpretation, including: matters of logic with respect to arrangement of steps, operational flow, order of components, or orientation of components; plain meaning derived from grammatical organization or punctuation, and; the number or type of embodiments described in the specification.

As used in the specification and the appended claims, the singular forms "a," "an," and "the" are intended to include the plural forms as well, unless the context clearly indicates otherwise. Thus, for example, reference to "a" component includes aspects having two or more such components, unless the context clearly indicates otherwise.

The term "consistent mechanical properties," as described herein, refers to a flexural modulus within 12% and a flexural strength within 30% of a similar glass fiber reinforced thermoplastic material that is identical except that it does not include a polyvinyl butyral component.

The term "average contact angle," as described herein, refers to the average contact angle of a drop of deionized water on the surface that is less than 85°, as measured with a contact angle goniometer, wherein the average contact angle is determined from ten droplets of 8.5 µL volume.

The term "flexural modulus," as described herein, refers the ratio of stress to strain in flexural deformation, as measured according to ASTM D790-17 at 23 °C and a rate of strain 0.05 in/min.

The term "flexural strength," as described herein, refers to the maximum bending stress that may be applied to a material before it yields, as measured according to ASTM D790-17 at 23 °C and a rate of strain 0.05 in/min.

The term "yield," as described herein, refers to the point on a stress-strain curve that indicates the limit of elastic behavior and the beginning of plastic behavior.

The term "tensile strength at yield," as described herein, refers to the maximum stress that a material can withstand while being stretched before it begins to change shape permanently, as measured according to ASTM D638-14 at 23 °C and a rate of strain of 0.2 in/min.

The term "tensile strength at break," as described herein, refers to the maximum stress that a material can withstand while stretching before breaking, as measured according to ASTM D638-14 at 23 °C and a rate of strain of 0.2 in/min.

The term "tensile modulus," as described herein, refers to the ratio of the stress along an axis over the strain along that axis, as measured according to ASTM D638-14 at 23 °C and a rate of strain of 0.2 in/min.

The term "impact resistance," as described herein, refers to the Notched Izod Impact strength or the kinetic energy needed to initiate fracture and continue the fracture until an article formed from the polymer blend described herein is broken, as measured according to ASTM D256-10 at 23 °C and 2.78 J.

The term "melt flow rate," as described herein, refers to the ability of a material's melt to flow under pressure, as measured according to ASTM D1238-20 at the given temperature and load.

As discussed hereinabove, glass fiber reinforced thermoplastic materials including a polyolefin (e.g., polypropylene) are widely used in automotive, appliance, furniture and electrical applications due to desirable mechanical properties (e.g., flexural modulus and strength). However, there is a growing demand for glass fiber reinforced thermoplastic materials with improved performance attributes (e.g., surface properties) and enhanced sustainability.

Polyvinyl butyral is widely used in adhesive and coating applications, such as automotive windshields and solar panels. However, reduced optical clarity of recycled polyvinyl butyral prevents reuse in laminated glass, such as automotive windshields. Moreover, the polarity of polyvinyl butyral may cause polyvinyl butyral to be immiscible with many commonly used polymers.

Disclosed herein are glass reinforced thermoplastic materials which mitigate the aforementioned problems. Specifically, the glass reinforced thermoplastic materials disclosed herein include a polymer matrix comprising a polyvinyl butyral component, a polyolefin component, and a maleic anhydride-functional compatibilizer. Advantageously, the glass reinforced thermoplastic material may have consistent mechanical properties (i.e., flexural modulus and flexural strength) and increased surface energy (e.g., reduced surface contact angle). Moreover, the polyvinyl butyral component may be obtained from a recycled source. The polyvinyl butyral component imparts increased surface energy and allows for enhanced sustainability. The polyolefin component imparts the desired mechanical properties. The maleic anhydride-functional compatibilizer helps compatibilize the glass reinforcement and the polyolefin component to ensure the consistent mechanical properties are achieved.

The glass reinforced thermoplastic materials disclosed herein may generally be described as comprising a polymer matrix comprising a polyvinyl butyral component, a polyolefin component, and a maleic anhydride-functional compatibilizer and a glass reinforcement.

### Polymer Matrix

As described hereinabove, the glass reinforced thermoplastic materials comprise a polymer matrix within which the glass reinforcement is dispersed. The polymer matrix includes a polyvinyl butyral component, a polyolefin component, and a maleic anhydride-functional compatibilizer.

In embodiments, the glass reinforced thermoplastic material may comprise 60 wt% to 90 wt% of the polymer matrix, based on a total weight of the glass reinforced thermoplastic material, to ensure the desired mechanical properties are achieved (e.g., flexural modulus and strength). In embodiments, the amount of polymer matrix in the glass reinforced thermoplastic material may be, based on a total weight of the glass reinforced thermoplastic material, greater than or equal to 60 wt%, greater than or equal to 63 wt%, greater than or equal to 65 wt%, greater than or equal to 67 wt%, or even greater than or equal to 70 wt%. In embodiments, the amount of polymer matrix in the glass reinforced thermoplastic material may be, based on a total weight of the glass reinforced thermoplastic material, less than or equal to 90 wt%, less than or equal to 85 wt%, less than or equal to 80 wt%, or even less than or equal to 75 wt%. In embodiments, the amount of polymer matrix in the glass reinforced thermoplastic material may be, based on a total weight of the glass reinforced thermoplastic material, from 60 wt% to 90 wt%, from 60 wt% to 85 wt%, from 60 wt% to 80 wt%, from 60 wt% to 75 wt%, from 63 wt% to 90 wt%, from 63 wt% to 85 wt%, from 63 wt% to 80 wt%, from 63 wt% to 75 wt%, from 65 wt% to 90 wt%, from 65 wt% to 85 wt%, from 65 wt% to 80 wt%, from 65 wt% to 75 wt%, from 67 wt% to 90 wt%, from 67 wt% to 85 wt%, from 67 wt% to 80 wt%, from 67 wt% to 75 wt%, from 70 wt% to 90 wt%, from 70 wt% to 85 wt%, from 70 wt% to 80 wt%, or even from 70 wt% to 75 wt%, or any and all sub-ranges formed from any of these endpoints.

### Polyvinyl Butyral Component

The polyvinyl butyral component included in the polymer matrix imparts increased surface energy (e.g., reduced surface contact angle) and allows for enhanced sustainability of the glass reinforced thermoplastic material.

The polymer matrix may include a minimum amount of polyvinyl butyral component (e.g., greater than or equal to 20 wt%) to impart increased surface energy and allow for enhanced sustainability. The amount of the polyvinyl butyral component may be limited (e.g., less than or equal to 50 wt%) to ensure the desired mechanical properties are achieved (e.g., flexural modulus and strength).

Accordingly, in embodiments, the polymer matrix may comprise, based on a total weight of the polymer matrix, 20 wt% to 50 wt% of a polyvinyl butyral component. In embodiments, the polymer matrix may comprise, based on a total weight of the polymer matrix, 22 wt% to 45 wt% of the polyvinyl butyral component, based on a total weight of the polymer matrix. In embodiments, the polymer matrix may comprise, based on a total weight of the polymer matrix, 27 wt% to 42 wt% of the polyvinyl butyral component, based on a total weight of the polymer matrix. In embodiments, the amount of the polyvinyl butyral component in the polymer matrix may be, based on a total weight of the polymer matrix, greater than or equal to 20 wt%, greater than or equal to 22 wt%, greater than or equal to 25 wt%, greater than or equal to 27 wt%, or even greater than or equal to 30 wt%. In embodiments, the amount of the polyvinyl butyral component in the polymer matrix may be, based on a total weight of the polymer matrix, less than or equal to 50 wt%, less than or equal to 47 wt%, less than or equal to 45 wt%, less than or equal to 42 wt%, or even less than or equal to 40 wt%. In embodiments, the amount of the polyvinyl butyral component in the polymer matrix may be, based on a total weight of the polymer matrix, from 20 wt% to 50 wt%, from 20 wt% to 47 wt%, from 20 wt% to 45 wt%, from 20 wt% to 42 wt%, from 20 wt% to 40 wt%, from 22 wt% to 50 wt%, from 22 wt% to 47 wt%, from 22 wt% to 45 wt%, from 22 wt% to 42 wt%, from 22 wt% to 40 wt%, from 25 wt% to 50 wt%, from 25 wt% to 47 wt%, from 25 wt% to 45 wt%, from 25 wt% to 42 wt%, from 25 wt% to 40 wt%, from 27 wt% to 50 wt%, from 27 wt% to 47 wt%, from 27 wt% to 45 wt%, from 27 wt% to 42 wt%, from 27 wt% to 40 wt%, from 30 wt% to 50 wt%, from 30 wt% to 47 wt%, from 30 wt% to 45 wt%, from 30 wt% to 42 wt%, or even from 30 wt% to 40 wt%, or any and all sub-ranges formed from any of these endpoints.

In embodiments, the polyvinyl butyral component may comprise virgin polyvinyl butyral, recycled polyvinyl butyral, or a combination thereof. The term "virgin," as used herein, refers to a polyvinyl butyral component coming from a source other than a recycled source. The term "recycled," as used herein, refers to a polyvinyl butyral coming from a recycled source. As such, in embodiments in which the polyvinyl butyral comprises recycled polyvinyl butyral, the polyvinyl butyral component helps ensure enhanced sustainability of the glass reinforced thermoplastic material. Recycled polyvinyl butyral may have impurities and color that may result in undesired properties. Accordingly, in embodiments, the recycled polyvinyl butyral may be processed to remove impurities or adjust color prior to being added to the polymer blend.

In embodiments, the polyvinyl butyral component may comprise a plasticizer. For example, recycled polyvinyl butyral may comprise a plasticizer as a result of its previous application (e.g., safety glass interlayer for windshield). In embodiments, the plasticizer may comprise triethyleneglycol bis (2-ethylhexanoate), tetraethylene glycol di-n-heptanoate, dibutyl sebacate, dihexyl adipate, dioctyl adipate, hexyl cyclohexyl adipate, or a combination thereof.

In embodiments, the polyvinyl butyral component may comprise 0 wt% to 30 wt% of the plasticizer, based on a total weight of the polyvinyl butyral component. In embodiments, the polyvinyl butyral component may comprise 10 wt% to 30 wt% of the plasticizer, based on a total weight of the polyvinyl butyral component. In embodiments, the amount of plasticizer in the polyvinyl butyral component may be, based on a total weight of the polyvinyl butyral component, greater than or equal to 0 wt%, greater than or equal to 5 wt%, greater than or equal to 10 wt%, or even greater than or equal to 15 wt%. In embodiments, the amount of plasticizer in the polyvinyl butyral component may be, based on a total weight of the polyvinyl butyral component, less than or equal to 30 wt%, less than or equal to 25 wt%, or even less than or equal to 20 wt%. In embodiments, the amount of plasticizer in the polyvinyl butyral component may be, based on a total weight of the polyvinyl butyral component, from 0 wt% to 30 wt%, from 0 wt% to 25 wt%, from 0 wt% to 20 wt%, from 5 wt% to 30 wt%, from 5 wt% to 25 wt%, from 5 wt% to 20 wt%, from 10 wt% to 30 wt%, from 10 wt% to 25 wt%, from 10 wt% to 20 wt%, from 15 wt% to 30 wt%, from 15 wt% to 25 wt%, or even from 15 wt% to 20 wt%, or any and all sub-ranges formed from any of these endpoints.

In embodiments, the polyvinyl butyral component may be dusted with mineral fillers, such as talc and calcium carbonate. Accordingly, in embodiments, the polymer matrix may comprise less than or equal to 2.5 wt%, less than or equal to 2 wt%, less than or equal to 1.5 wt%, less than or equal to 1 wt%, or even less than or equal to 0.5 wt% mineral fillers, based on a total weight of the polymer matrix.

Suitable commercial embodiments of the polyvinyl butyral component comprising polyvinyl butyral from a recycled source and a plasticizer are available under the Shark Pellets brand, such as C2c, available from Shark Solutions.

### Polyolefin Component

The polyolefin component included in the polymer matrix imparts desired mechanical properties (e.g., flexural modulus and strength).

In embodiments, the polymer matrix may comprise, based on a total weight of the polymer matrix, 45 wt% to 80 wt% of the polyolefin component. In embodiments, the amount of the polyolefin component in the polymer matrix may be, based on a total weight of the polymer matrix, greater than or equal to 45 wt%, greater than or equal to 47 wt%, greater than or equal to 49 wt%, greater than or equal to 51%, greater than or equal to 53%, greater than or equal to 55%, or even greater than or equal to 57%. In embodiments, the amount of the polyolefin component in the polymer matrix may be, based on a weight of the polymer matrix, less than or equal to 80 wt%, less than or equal to 75 wt%, less than or equal to 70 wt%, or even less than or equal to 65 wt%. In embodiments, the amount of the polyolefin component in the polymer matrix may be, based on a total weight of the polymer matrix, from 45 wt% to 80 wt%, from 45 wt% to 75 wt%, from 45 wt% to 70 wt%, from 45 wt% to 65 wt%, from 47 wt% to 80 wt%, from 47 wt% to 75 wt%, from 47 wt% to 70 wt%, from 47 wt% to 65 wt%, from 49 wt% to 80 wt%, from 49 wt% to 75 wt%, from 49 wt% to 70 wt%, from 49 wt% to 65 wt%, from 51 wt% to 80 wt%, from 51 wt% to 75 wt%, from 51 wt% to 70 wt%, from 51 wt% to 65 wt%, from 53 wt% to 80 wt%, from 53 wt% to 75 wt%, from 53 wt% to 70 wt%, from 53 wt% to 65 wt%, from 55 wt% to 80 wt%, from 55 wt% to 75 wt%, from 55 wt% to 70 wt%, from 55 wt% to 65 wt%, from 57 wt% to 80 wt%, from 57 wt% to 75 wt%, from 57 wt% to 70 wt%, or even from 57 wt% to 65 wt%, or any and all sub-ranges formed from any of these endpoints.

In embodiments, the polyolefin component may comprise polyethylene, polypropylene, or a combination thereof.

In embodiments, the polyolefin component may comprise at least one polyethylene polymer. In embodiments, the at least one polyethylene polymer may comprise a polyethylene homopolymer (i.e., composed of ethylene monomers) or a polyethylene copolymer having greater than 50 wt% ethylene monomer, based on a total of monomeric units in the polyethylene copolymer and an additional comonomer, such as C₃-C₁₂ alpha olefins.

In embodiments, the at least one polyethylene polymer may comprise a melt flow rate (190 °C/2.16 kg) from 1 g/10 min to 100 g/10 min. In embodiments, the at least one polyethylene polymer may comprise a melt flow rate (190 °C/2.16 kg) greater than or equal to 1 g/10 min, greater than or equal to 5 g/10 min, greater than or equal to 10 g/10 min, greater than or equal to 30 g/10 min, greater than or equal to 50 g/10 min, or even greater than or equal to 70 g/10 min. In embodiments, the at least one polyethylene polymer may comprise a melt flow rate (190 °C/2.16 kg) less than or equal to 100 g/10 min, less than or equal to 80 g/10 min, less than or equal to 60 g/10 min, less than or equal to 40 g/10 min, or even less than or equal to 20 g/10 min. In embodiments, the at least one polyethylene polymer may comprise a melt flow rate (190 °C/2.16 kg) from 1 g/10 min to 100 g/10 min, from 1 g/10 min to 80 g/10 min, from 1 g/10 min to 60 g/10 min, from 1 g/10 min to 40 g/10 min, from 1 g/10 min to 20 g/10 min, from 5 g/10 min to 100 g/10 min, from 5 g/10 min to 80 g/10 min, from 5 g/10 min to 60 g/10 min, from 5 g/10 min to 40 g/10 min, from 5 g/10 min to 20 g/10 min, from 10 g/10 min to 100 g/10 min, from 10 g/10 min to 80 g/10 min, from 10 g/10 min to 60 g/10 min, from 10 g/10 min to 40 g/10 min, from 10 g/10 min to 20 g/10 min, from 30 g/10 min to 100 g/10 min, from 30 g/10 min to 80 g/10 min, from 30 g/10 min to 60 g/10 min, from 30 g/10 min to 40 g/10 min, from 50 g/10 min to 100 g/10 min, from 50 g/10 min to 80 g/10 min, from 50 g/10 min to 60 g/10 min, from 70 g/10 min to 100 g/10 min, or even from 70 g/10 min to 80 g/10 min, or any and all sub-ranges formed from any of these endpoints.

In embodiments, the polyolefin component may comprise at least one polypropylene polymer. In embodiments, the at least one polypropylene polymer may be selected from the group consisting of a polypropylene homopolymer (i.e., composed of propylene monomers), polypropylene impact copolymer, and polypropylene random copolymer. In embodiments, the at least one polypropylene polymer may comprise a polypropylene copolymer that includes greater than or equal to 85% propylene monomeric units, based on a total of monomeric units in the polypropylene copolymer.

In embodiments, the at least one polypropylene polymer may comprise a melt flow rate (230 °C/2.16 kg) from 1 g/10 min to 100 g/10 min. In embodiments, the at least one polypropylene polymer may comprise a melt flow rate (230 °C/2.16 kg) greater than or equal to 1 g/10 min, greater than or equal to 5 g/10 min, greater than or equal to 10 g/10 min, greater than or equal to 30 g/10 min, greater than or equal to 50 g/10 min, or even greater than or equal to 70 g/10 min. In embodiments, the at least one polypropylene polymer may comprise a melt flow rate (230 °C/2.16 kg) less than or equal to 100 g/10 min, less than or equal to 80 g/10 min, less than or equal to 60 g/10 min, less than or equal to 40 g/10 min, or even less than or equal to 20 g/10 min. In embodiments, the at least one polypropylene polymer may comprise a melt flow rate (230 °C/2.16 kg) from 1 g/10 min to 100 g/10 min, from 1 g/10 min to 80 g/10 min, from 1 g/10 min to 60 g/10 min, from 1 g/10 min to 40 g/10 min, from 1 g/10 min to 20 g/10 min, from 5 g/10 min to 100 g/10 min, from 5 g/10 min to 80 g/10 min, from 5 g/10 min to 60 g/10 min, from 5 g/10 min to 40 g/10 min, from 5 g/10 min to 20 g/10 min, from 10 g/10 min to 100 g/10 min, from 10 g/10 min to 80 g/10 min, from 10 g/10 min to 60 g/10 min, from 10 g/10 min to 40 g/10 min, from 10 g/10 min to 20 g/10 min, from 30 g/10 min to 100 g/10 min, from 30 g/10 min to 80 g/10 min, from 30 g/10 min to 60 g/10 min, from 30 g/10 min to 40 g/10 min, from 50 g/10 min to 100 g/10 min, from 50 g/10 min to 80 g/10 min, from 50 g/10 min to 60 g/10 min, from 70 g/10 min to 100 g/10 min, or even from 70 g/10 min to 80 g/10 min, or any and all sub-ranges formed from any of these endpoints.

Suitable commercial embodiments on the polyolefin component are available from Braskem, such as polypropylene grade CP 360H.

### Maleic Anhydride-functional Compatibilizer

The maleic anhydride-functional compatibilizer included in the polymer matrix helps compatibilize the glass reinforcement and the polyolefin component to ensure the consistent mechanical properties are achieved.

In embodiments, the polymer matrix may comprise, based on a total weight of the polymer matrix, 0.5 wt% to 9 wt% of the maleic anhydride-functional compatibilizer. In embodiments, the polymer matrix may comprise, based on a total weight of the polymer matrix, 1 wt% to 5 wt% of the maleic anhydride-functional compatibilizer. In embodiments, the polymer matrix may comprise, based on a total weight of the polymer matrix, 1.5 wt% to 2.5 wt% of the maleic anhydride-functional compatibilizer. In embodiments, the amount of maleic anhydride-functional compatibilizer in the polymer matrix may be, based on a total weight of the polymer matrix, greater than or equal to 0.5 wt%, greater than 1 wt%, greater than or equal to 1.5 wt%, or even greater than or equal to 2 wt%. In embodiments, the amount of maleic anhydride-functional compatibilizer in the polymer matrix may be, based on a total weight of the polymer matrix, less than or equal to 9 wt%, less than or equal to 7.5 wt%, less than or equal to 5 wt%, or even less than or equal to 2.5 wt%. In embodiments, the amount of maleic anhydride-functional compatibilizer in the polymer matrix may be, based on a total weight of the polymer matrix from 0.5 wt% to 9 wt%, from 0.5 wt% to 7.5 wt%, from 0.5 wt% to 5 wt%, from 0.5 wt% to 2.5 wt%, from 1 wt% to 9 wt%, from 1 wt% to 7.5 wt%, from 1 wt% to 5 wt%, from 1 wt% to 2.5 wt%, from 1.5 wt% to 9 wt%, from 1.5 wt% to 7.5 wt%, from 1.5 wt% to 5 wt%, from 1.5 wt% to 2.5 wt%, from 2 wt% to 9 wt%, from 2 wt% to 7.5 wt%, from 2 wt% to 5 wt%, or even from 2 wt% to 2.5 wt%, or any and all sub-ranges formed from any of these endpoints.

In embodiments, the maleic anhydride-functional compatibilizer may comprise maleic anhydride grafted polypropylene, maleic anhydride grafted polyethylene, or a combination thereof.

While not wishing to be bound by theory, it is believed that the functional group reactivity of maleic anhydride grafted polypropylene and maleic anhydride grafted polyethylene may be higher than the functional group reactivity of other maleic anhydride-functional compatibilizers. This relatively higher functional group reactivity may result in the consistent mechanical properties described herein.

In embodiments, the maleic anhydride-functional compatibilizer may include 0.5 wt% to 3 wt% maleic anhydride functional group, based on a total weight of the maleic anhydride-functional compatibilizer. In embodiments, the amount of maleic anhydride functional group in the maleic anhydride-functional compatibilizer may be, based on a total weight of the maleic anhydride-functional compatibilizer, greater than or equal to 0.5 wt% or even greater than or equal to 1 wt%. In embodiments, the amount of maleic anhydride functional group in the maleic anhydride-functional compatibilizer may be, based on a total weight of the maleic anhydride-functional compatibilizer, less than or equal to 3 wt%, less than or equal to 2.5 wt%, less than or equal to 2 wt%, or even less than or equal to 1.5 wt%. In embodiments, the amount of maleic anhydride functional group in the maleic anhydride-functional compatibilizer may be, based on a total weight of the maleic anhydride-functional compatibilizer, from 0.5 wt% to 3 wt%, from 0.5 wt% to 2.5 wt%, from 0.5 wt% to 2 wt%, from 0.5 wt% to 1.5 wt%, from 1 wt% to 3 wt%, from 1 wt% to 2.5 wt%, from 1 wt% to 2 wt%, or even from 1 wt% to 1.5 wt%, or any and all sub-ranges formed from any of these endpoints.

Suitable commercial embodiments of the maleic anhydride-functional compatibilizer are available under the brand BONDYRAM, such as polypropylene grafted maleic anhydride (polypropylene-g-MAH) grade 1001, available from Polyram Group; or available under the brand PA Bond, such as polyethylene grafted maleic anhydride (polyethylene-g-MAH) grade 323, available from Polymer Asia.

### Glass Reinforcement

The glass reinforcement included in the glass reinforced thermoplastic material described herein ensures the desired mechanical properties are achieved (e.g., flexural modulus and strength). In embodiments, the glass reinforced thermoplastic material may comprise, based on a total weight of the glass reinforced thermoplastic material, 10 wt% to 40 wt% of the glass reinforcement. In embodiments, the amount of glass reinforcement in the glass reinforced thermoplastic material may be, based on a total weight of the glass reinforced thermoplastic material, greater than or equal to 10 wt%, greater than or equal to 15 wt%, greater than or equal to 20 wt, or even greater than or equal to 25 wt%. In embodiments, the amount of glass reinforcement in the glass reinforced thermoplastic material may be, based on a total weight of the glass reinforced thermoplastic material, less than or equal to 40 wt% or even less than or equal to 35 wt%. In embodiments, the amount of glass reinforcement in the glass reinforced thermoplastic material may be, based on a total weight of the glass reinforced thermoplastic material, from 10 wt% to 40 wt%, from 10 wt% to 35 wt%, from 15 wt% to 40 wt%, from 15 wt% to 35 wt%, from 20 wt% to 40 wt%, from 20 wt% to 35 wt%, from 25 wt% to 40 wt%, or even from 25 wt% to 35 wt%, or any and all sub-ranges formed from any of these endpoints.

In embodiments, the glass reinforcement may comprise at least one of short glass fibers, long glass fibers, and glass beads. The term "short glass fibers," as used herein, refers to glass having a thread-like shape and having a length less than or equal to 4 mm prior to compounding. The term "long glass fibers," as used herein, refers to continuous glass having a thread-like shape run through a pultrusion process and chopped into smaller strands. The term "glass beads," as used herein, refers to glass having a spherical shape.

In embodiments, the glass reinforcement may have an average diameter of 10 µm to 17 µm. In embodiments, the glass reinforcement may have an average diameter greater than or equal to 10 µm or even greater than or equal to 12 µm. In embodiments, the glass reinforcement may have an average diameter less than or equal to 17 µm or even less than or equal to 15 µm. In embodiments, the glass reinforcement may have an average diameter from 10 µm to 17 µm, from 10 µm to 15 µm, from 12 µm to 17 µm, or even from 12 µm to 15 µm, or any and all sub-ranges formed from any of these endpoints.

In embodiments, the glass reinforcement may comprise a sizing composition to allow for compatibilization between the glass reinforcement and the polyolefin component, which leads to the consistent mechanical properties. In embodiments, the sizing composition may comprises at least one of a film former, a lubricant, and a coupling agent.

Suitable commercial embodiments of the glass reinforcement are available under the CHOPVANTAGE brand, such as short glass fiber grade HP 3299, available from NEG; or under the TUFROV brand, such as long glass fiber grade 4588, available from NEG.

### Glass Reinforced Thermoplastic Material

As described herein, the glass fiber reinforced thermoplastic materials including a polymer matrix comprising a polyvinyl butyral component, a polyolefin component, and a maleic anhydride-functional compatibilizer, which have consistent mechanical properties (i.e., flexural modulus and strength) and increased surface energy (e.g., reduced contact angle) and allow for enhanced sustainability.

In embodiments, the glass reinforced thermoplastic material may include a surface and the average contact angle of a drop of deionized water on the surface may be less than 85°, less than 83°, less than less than 81°, less than 79°, or even less than 77°, as measured with a contact angle goniometer, wherein the average contact angle is determined from ten droplets of 8.5 µL volume.

In embodiments, the glass reinforced thermoplastic material may include a surface and the average contact angle of a drop of water on the surface may be from 70° to 85°, from 70° to 83°, from 70° to 81°, from 70° to 79°, from 70° to 77°, from 72° to 85°, from 72° to 83°, from 72° to 81°, from 72° to 79°, from 72° to 77°, from 74° to 85°, from 74° to 83°, from 74° to 81°, from 74° to 79°, or even from 74° to 77°, as measured with a contact angle goniometer, wherein the average contact angle is determined from ten droplets of 8.5 µL volume.

In embodiments, the glass reinforced thermoplastic material may have a flexural strength that is within 30%, within 27%, within 25%, within 23%, or even within 20% of the flexural strength of a similar glass reinforced thermoplastic material that is identical except that it does not include the polyvinyl butyral component.

In embodiments, the glass reinforced thermoplastic material may have a flexural modulus that is within 12%, within 10%, or even within 8% of the flexural modulus of a similar glass reinforced thermoplastic material that is identical except that it does not include the polyvinyl butyral component.

In embodiments, the glass reinforced thermoplastic material may have a flexural modulus greater than or equal to 4000 MPa or even greater than 4500 MPa. In embodiments, the glass reinforced thermoplastic material may have a flexural modulus less than or equal to 5500 MPa or even less than or equal to 5000 MPa. In embodiments, the glass reinforced thermoplastic material may have a flexural modulus from 4000 MPa to 5500 MPa, from 4000 MPa to 5000 MPa, from 4500 MPa to 5500 MPa, or even from 4500 MPa to 5000 MPa, or any and all sub-ranges formed from any of these endpoints.

In embodiments, the glass reinforced thermoplastic material may have a flexural strength greater than or equal to 60 MPa, greater than or equal to 70 MPa, or even greater than or equal to 80 MPa. In embodiments, the glass reinforced thermoplastic material may have a flexural strength less than or equal to 110 MPa or even less than or equal to 95 MPa. In embodiments, the glass reinforced thermoplastic material may have a flexural strength from 60 MPa to 110 MPa, from 60 MPa to 95 MPa, from 70 MPa to 110 MPa, from 70 MPa to 95 MPa, from 80 MPa to 110 MPa, or even from 80 MPa to 95 MPa, or any and all sub-ranges formed from any of these endpoints.

In embodiments, the glass reinforced thermoplastic material may have a tensile strength at yield greater than or equal to 40 MPa or even greater than or equal to 50 MPa. In embodiments, the glass reinforced thermoplastic material may have a tensile strength at yield less than or equal to 70 MPa or even less than or equal to 60 MPa. In embodiments, the glass reinforced thermoplastic material may have a tensile strength at yield from 40 MPa to 70 MPa, from 40 MPa to 60 MPa, from 50 MPa to 70 MPa, or even from 50 MPa to 60 MPa, or any and all sub-ranges formed from any of these endpoints.

In embodiments, the glass reinforced thermoplastic material may have a tensile strength at break greater than or equal to 35 MPa or even greater than or equal to 45 MPa. In embodiments, the glass reinforced thermoplastic material may have a tensile strength at break less than or equal to 70 MPa or even less than or equal to 60 MPa. In embodiments, the glass reinforced thermoplastic material may have a tensile strength at break from 35 MPa to 70 MPa, from 35 MPa to 60 MPa, from 45 MPa to 70 MPa, or even from 45 MPa to 60 MPa, or any and all sub-ranges formed from any of these endpoints.

In embodiments, the glass reinforced thermoplastic material may have a tensile modulus greater than or equal to 5000 MPa or even greater than or equal to 5500 MPa. In embodiments, the glass reinforced thermoplastic material may have a tensile modulus less than or equal to 6500 MPa or even less than or equal to 6000 MPa. In embodiments, the glass reinforced thermoplastic material may have a tensile modulus from 5000 MPa to 6500 MPa, from 5000 MPa to 6000 MPa, from 5500 MPa to 6500 MPa, or even from 5500 MPa to 6000 MPa, or any and all sub-ranges formed from any of these endpoints.

**In** embodiments, the glass reinforced thermoplastic material may have an impact resistance greater than or equal to 60 J/m or even greater than or equal to 80 J/m. In embodiments, the glass reinforced thermoplastic material may have an impact resistance less than or equal to 120 J/m or even less than or equal to 100 J/m. In embodiments, the glass reinforced thermoplastic material may have an impact resistance from 60 J/m to 120 J/m, from 60 J/m to 100 J/m, from 80 J/m to 120 J/m, or even from 80 J/m to 100 J/m, or any and all sub-ranges formed from any of these endpoints.

**In** embodiments, the glass reinforced thermoplastic material may have a melt flow rate greater than or equal to 1 g/10 min or even greater than or equal to 5 g/10 min. In embodiments, the glass reinforced thermoplastic material may have a melt flow rate less than or equal to 20 g/10 min or even less than or equal to 15 g/10 min. In embodiments, the glass reinforced thermoplastic material may have a melt flow rate from 1 g/10 min to 20 g/10 min, from 1 g/10 min to 15 g/10 min, from 5 g/10 min to 20 g/10 min, or even from 5 g/10 min to 15 g/10 min, or any and all sub-ranges formed from any of these endpoints.

### Additives

**In** embodiments, the glass reinforced thermoplastic material may further comprise an additive. The additive can be used in any amount that is sufficient to obtain a desired processing or performance property for the glass reinforced thermoplastic material. The amount should not be wasteful of the additive nor detrimental to the processing or performance of the glass reinforced thermoplastic material.

**In** embodiments, the additive may comprise anti-blocking agents; stabilizers; adhesion promoters; anti-fogging agents; anti-static agents; biocides (antibacterials, fungicides, and mildewcides); colorants including pigments and dyes; dispersants; fillers and extenders; fire and flame retardants and smoke suppressants; hardness adjusters; impact modifiers; initiators; lubricants; mold release agents; processing aids; silanes, titanates and zirconates; stearates; ultraviolet light absorbers; viscosity regulators; or combinations thereof.

### Processing

**In** embodiments, the components of the reinforced thermoplastic material may be added all together in an extruder and mixed. In embodiments, mixing may be a continuous process at an elevated temperature (e.g., 120 °C - 250 °C) with a mixing speed from 200 revolutions per minute (rpm) to 700 rpm that is sufficient to melt the polymer matrix. In embodiments, the output from the extruder may be pelletized for later extrusion, molding, thermoforming, foaming, calendaring, and/or other processing into articles.

### Applications

As described herein, the glass reinforced thermoplastic material may be useful for any type of product for which properties such as consistent mechanical properties (i.e., flexural modulus and strength), increased surface energy, and enhanced sustainability are desirable or required.

For example, increased surface energy allows for the glass reinforced thermoplastic material to be coated, such as with a paint or dye. In embodiments, a coated article may comprise a substrate having a surface, and a coating applied to the surface, wherein the substrate comprises the glass reinforced thermoplastic material of any of the preceding claims. In embodiments, the coating may comprise a primer, an adhesion promoter, paint, or a combination thereof.

The glass reinforced thermoplastic materials have potential for use in applications in many different industries, including but not limited to: automotive and transportation; consumer products; electronics; healthcare and medical; household appliances; packaging; and other industries or applications benefiting from the unique combination of properties.

### EXAMPLES

Table 1 shows sources of ingredients for the glass reinforced thermoplastic material of Examples E1-E8 and Comparative Examples C1-C13.

**Table 1**

| **Ingredient** | **Brand** | **Source** |
|---|---|---|
| recycled PVB *(polyvinyl butyral component)* | SHARK PELLETS C2c | Shark Solutions |
| polypropylene *(polyolefin component)* | CP 360H | Braskem |
| polypropylene-g-MAH (1 wt% functional group content) *(maleic anhydride-functional compatibilizer)* | BONDYRAM 1001 | Polyram Group |
| styrene-ethylene-butylene-styrene (SEBS)-g-MAH (2 wt% functional group content) *(maleic anhydride-functional compatibilizer)* | KRATON FG1901 | Kraton Corporation |
| ethylene methyl acrylate (EMAC)-g-MAH (24 wt% functional group content) *(maleic anhydride-functional compatibilizer)* | EMAC SP2260 | Westlake Chemical |
| glass fiber *(glass reinforcement)* | CHOPVANTAGE HP 3299 | NEG |

Tables 2-5 show the formulations (in wt%, based on a total weight of the glass reinforced thermoplastic material) and certain properties of Examples E1 and E2 and Comparative Examples C1-C11.

**Table 2**

| *Examples* | **C1** | **C2** | **C3** |
|---|---|---|---|
| *SHARK PELLETS C2c* | - | - | 25.0 |
| *CP 360H* | 68.5 | 65.0 | 45.0 |
| *BONDYRAM 1001* | 1.5 | 5.0 | - |
| *CHOP VANTAGE HP 3299* | 30.0 | 30.0 | 30.0 |
| TOTAL | 100.0 | 100.0 | 100.0 |
| *Flexural modulus (MPa)* | 5293 | 4817 | 4700 |
| *Flexural strength (MPa)* | 113 | 108 | 67 |
| *Tensile strength at yield (MPa)* | 75 | 72 | 45 |
| *Tensile strength at break (MPa)* | 75 | 71 | 45 |
| *Tensile modulus (MPa)* | 6713 | 6153 | 5926 |
| *Impact Resistance (J*/*m)* | 90 | 82 | 52 |
| *Melt flow rate (g*/*10 min)* | 10.35 | 14.55 | 0.85 |

**Table 3**

| *Examples* | **E1** | **E2** |
|---|---|---|
| *SHARK PELLETS C2c* | 25.0 | 25.0 |
| *CP 360H* | 43.5 | 40.0 |
| *BONDYRAM 1001* | 1.5 | 5.0 |
| *CHOP VANTAGE HP 3299* | 30.0 | 30.0 |
| TOTAL | 100.0 | 100.0 |
| *Flexural modulus (MPa)* | 4782 | 4590 |
| *Flexural strength (MPa)* | 89 | 92 |
| *Tensile strength at yield (MPa)* | 56 | 58 |
| *Tensile strength at break (MPa)* | 50 | 55 |
| *Tensile modulus (MPa)* | 5789 | 5520 |
| *Impact Resistance (J*/*m)* | 91 | 86 |
| *Melt flow rate (g*/*10 min)* | 10.50 | 11.40 |

**Table 4**

| *Examples* | **C4** | **C5** | **C6** | **C7** |
|---|---|---|---|---|
| *SHARK PELLETS C2c* | - | - | 25.0 | 25.0 |
| *CP 360H* | 69.0 | 65.0 | 44.0 | 40.0 |
| *KRATON FG1901* | 1.0 | 5.0 | 1.0 | 5.0 |
| *CHOP VANTAGE HP 3299* | 30.0 | 30.0 | 30.0 | 30.0 |
| TOTAL | 100.0 | 100.0 | 100.0 | 100.0 |
| *Flexural modulus (MPa)* | 5061 | 4712 | 4246 | 3633 |
| *Flexural strength (MPa)* | 97 | 84 | 56 | 36 |
| *Tensile strength at yield (MPa)* | 67 | 58 | 41 | 29 |
| *Tensile strength at break (MPa)* | 61 | 58 | 40 | 27 |
| *Tensile modulus (MPa)* | 6313 | 5884 | 5395 | 4669 |
| *Impact Resistance (J*/*m)* | 76 | 105 | 76 | 86 |
| *Melt flow rate (g*/*10 min)* | 11.85 | 8.85 | 0.35 | 5.40 |

**Table 5**

| *Examples* | **C8** | **C9** | **C10** | **C11** |
|---|---|---|---|---|
| *SHARK PELLETS C2c* | - | - | 25.0 | 25.0 |
| *CP 360H* | 69.0 | 65.0 | 44.0 | 40.0 |
| *EMAC SP2260* | 1.0 | 5.0 | 1.0 | 5.0 |
| *CHOP VANTAGE HP 3299* | 30.0 | 30.0 | 30.0 | 30.0 |
| TOTAL | 100.0 | 100.0 | 100.0 | 100.0 |
| *Flexural modulus (MPa)* | 4945 | 4588 | 4204 | 3891 |
| *Flexural strength (MPa)* | 84 | 80 | 56 | 51 |
| *Tensile strength at yield (MPa)* | 55 | 51 | 41 | 37 |
| *Tensile strength at break (MPa)* | 54 | 49 | 41 | 36 |
| *Tensile modulus (MPa)* | 6027 | 5592 | 5855 | 5532 |
| *Impact Resistance (J*/*m)* | 46 | 47 | 40 | 45 |
| *Melt flow rate (g*/*10 min)* | 12.35 | 12.00 | 6.60 | 7.90 |

As shown in Tables 2 and 3, Examples E1 and E2, glass reinforced thermoplastic materials including SHARK PELLETS C2c (polyvinyl butyral component), CP 360H (polyolefin component), and BONDYRAM 1001 (maleic anhydride-functional compatibilizer), had a flexural modulus within 9.7% and 4.7%, respectively, and a flexural strength within 20.6% and 14.7%, respectively, of Comparative Examples C1 and C2, respectively, glass reinforced thermoplastic materials including CP 360H and BONDYRAM 1001 and lacking a polyvinyl butyral component. As exemplified by Examples E1 and E2 and Comparative Examples C1 and C2, glass reinforced thermoplastic material including a polyvinyl butyral component as described herein have consistent mechanical properties as compared to a similar glass reinforced thermoplastic material that is identical except that it does not include the polyvinyl butyral component.

Referring back to Tables 2 and 3, Examples E1 and E2, glass reinforced thermoplastic materials including SHARK PELLETS C2c (polyvinyl butyral component), CP 360H (polyolefin component), and BONDYRAM 1001 (maleic anhydride-functional compatibilizer), had improved flexural modulus and flexural strength as compared to Comparative Example C3, glass reinforced thermoplastic material including SHARK PELLETS C2c and CP 360H and lacking a maleic anhydride-functional compatibilizer. As exemplified by Examples E1 and E2 and Comparative Example C3, glass reinforced thermoplastic material including a maleic anhydride-functional compatibilizer as described herein have improved flexural modulus and flexural strength as compared to a similar composition lacking a maleic anhydride-functional compatibilizer. While not wishing to be bound by theory, it is believed that the maleic anhydride-functional compatibilizer helps compatibilize the glass reinforcement and the polyolefin component, resulting in improved mechanical properties.

Referring now to Table 4, Comparative Examples C6 and C7, glass reinforced thermoplastic materials including SHARK PELLETS C2c (polyvinyl butyral component), CP 360H (polyolefin component), and KRATON FG1901 (SEBS grafted maleic anhydride-functional compatibilizer), had a flexural modulus within 16.1% and 22.9%, respectively, and a flexural strength within 42.3% and 57.1%, respectively, of Comparative Examples C4 and C5, respectively, glass reinforced thermoplastic materials including CP 360H and KRATON FG1901 and lacking a polyvinyl butyral component. Referring now to Table 5, Comparative Examples C10 and C11, glass reinforced thermoplastic materials including SHARK PELLETS C2c, CP 360H, and EMAC SP2260 (EMAC grafted maleic anhydride-functional compatibilizer), had a flexural modulus within 15.0% and 15.2%, respectively, and a flexural strength within 33.2% and 35.9%, respectively, of Comparative Examples C8 and C9, respectively, glass reinforced thermoplastic materials including CP 360H and EMAC SP2260 and lacking a polyvinyl butyral component. As exemplified by Comparative Examples C4-C11, glass reinforced thermoplastic material including SEBS grafted maleic anhydride-functional compatibilizer or EMAC grafted maleic anhydride-functional compatibilizer do not result in consistent mechanical properties. While not wishing to be bound by theory, it is believed that the functional group reactivity of the polypropylene-g-MAH compatibilizer and polyethylene-g-MAH compatibilizer used in Examples E1 and E2 are higher than the functional group reactivity of the SEBS grafted maleic anhydride-functional compatibilizer and the EMAC grafted maleic anhydride-functional compatibilizer as used in Comparative Examples C4-C11. This relatively higher functional group reactivity may result in the consistent mechanical properties described herein.

Tables 6 and 7 show the formulations and the average contact angle of Examples E3-E8 and Comparative Examples C12 and C13. The amount of SHARK PELLETS C2c (polyvinyl butyral component), CP 360H (polyolefin component), and BONDYRAM 1001 (maleic anhydride-functional compatibilizer) were based on the total weight of the polymer matrix. The amount of CHOPVANTAGE HP 3299 (glass reinforcement) was based on the total weight of the glass reinforced thermoplastic material. All of Examples E3-E8 and Comparative Examples C12 and C13 included, based on a total weight of the glass reinforced thermoplastic material, 30 wt% glass reinforcement and 70 wt% polymer matrix.

Injection molded ASTM flex bars were molded in an injection molder using a three-cavity ASTM mold. The temperature profile was as follows:
- Feed: 135 °F (57 °C)
- Barrel 4: 400 °F (204 °C)
- Barrel 3: 400 °F (204 °C)
- Barrel 2: 395 °F (202 °C)
- Nozzle: 390 °F (199 °C)
- Mold: 70 °F (21 °C)

Contact angle tests were performed on a on a Rame-Hart goniometer using 8.5 mL drops of deionized water on the injection molded ASTM flex bars. Ten droplets were averaged together for each sample. "First Pass" means the formulations were passed through the extruder once prior to formulating the sample. "Second Pass" means the formulations were passed through the extruder twice prior to forming the sample.

**Table 6**

| *Examples* | **C12** | **E3** | **E4** | **E5** |
|---|---|---|---|---|
| *SHARK PELLETS C2c* | - | 21.0 | 36.0 | 50.0 |
| *CP 360H* | 97.6 | 76.6 | 61.6 | 47.6 |
| *BONDYRAM 1001* | 2.1 | 2.1 | 2.1 | 2.1 |
| *ADDITIVES* | 0.3 | 0.3 | 0.3 | 0.3 |
| *CHOP VANTAGE HP 3299* | 30.0 | 30.0 | 30.0 | 30.0 |
| TOTAL | 100.0 | 100.0 | 100.0 | 100.0 |
| *Pass* | First | First | First | First |
| *Average contact angle (°)* | 96.3 | 77.8 | 76.6 | 77.7 |

**Table 7**

| *Examples* | **E6** | **E7** | **E8** | **C13** |
|---|---|---|---|---|
| *SHARK PELLETS C2c* | 21.0 | 36.0 | 50.0 | 99.93 |
| *CP 360H* | 76.6 | 61.6 | 47.6 | - |
| *BONDYRAM 1001* | 2.1 | 2.1 | 2.1 | - |
| *ADDITIVES* | 0.3 | 0.3 | 0.3 | 0.07 |
| *CHOP VANTAGE HP 3299* | 30.0 | 30.0 | 30.0 | 30.0 |
| TOTAL | 100.0 | 100.0 | 100.0 | 100.0 |
| *Pass* | Second | Second | Second | First |
| *Average contact angle (°)* | 96.3 | 77.8 | 76.6 | 77.7 |

As shown in Tables 6 and 7, Examples E3-E8, glass reinforced thermoplastic materials including SHARK PELLETS C2c (polyvinyl butyral component), CP 360H (polyolefin component), and BONDYRAM 1001 (maleic anhydride-functional compatibilizer) had an approximately 20° decrease in average contact angle as compared to Comparative Example C12, CP 360H. As exemplified by Examples E3-E8 and Comparative Example C12, glass reinforced thermoplastic materials including polyvinyl butyral component as described herein have increased surface energy as compared to a polyolefin only material.

## Claims

1. A glass reinforced thermoplastic material, comprising:
a polymer matrix comprising, based on a total weight of the polymer matrix:
20 wt% to 50 wt% of a polyvinyl butyral component;
45 wt% to 80 wt% of a polyolefin component, the polyolefin component comprising polyethylene, polypropylene, or a combination thereof; and
0.5 wt% to 9 wt% of a maleic anhydride-functional compatibilizer, the maleic anhydride-functional compatibilizer comprising maleic anhydride grafted polypropylene, maleic anhydride grafted polyethylene, or a combination thereof; and
10 wt% to 40 wt% of a glass reinforcement, based on a total weight of the glass reinforced thermoplastic material.

2. The glass reinforced thermoplastic material of claim 1, wherein the glass reinforced thermoplastic material comprises 60 wt% to 90 wt% of the polymer matrix, based on a total weight of the glass reinforced thermoplastic material.

3. The glass reinforced thermoplastic material of any of the preceding claims, wherein the glass reinforcement comprises at least one of short glass fibers, long glass fibers, and glass beads, and/or wherein the glass reinforcement comprises a sizing composition, the sizing composition comprising at least one of a film former, lubricant, and a coupling agent; and/or wherein the glass reinforcement has an average diameter of 10 µm to 17 µm.

4. The glass reinforced thermoplastic material of any of the preceding claims, wherein the polymer matrix comprises 1 wt% to 5 wt% of the maleic anhydride-functional compatibilizer, based on a total weight of the polymer matrix; and/or wherein the polymer matrix comprises 1.5 wt% to 2.5 wt% of the maleic anhydride-functional compatibilizer, based on a total weight of the polymer matrix; and/or wherein the maleic anhydride-functional compatibilizer includes 0.5 wt% to 3 wt% maleic anhydride functional group, based on a total weight of the maleic anhydride-functional compatibilizer.

5. The glass reinforced thermoplastic material of any of the preceding claims, wherein the polymer matrix comprises 22 wt% to 45 wt% of the polyvinyl butyral component, based on a total weight of the polymer matrix; and/or wherein the polymer matrix comprises 27 wt% to 42 wt% of the polyvinyl butyral component, based on a total weight of the polymer matrix; and/or wherein the polyvinyl butyral component comprises virgin polyvinyl butyral, recycled polyvinyl butyral, or a combination thereof.

6. The glass reinforced thermoplastic material of any of the preceding claims, wherein the polyvinyl butyral component comprises a plasticizer; optionally the polyvinyl butyral component comprises 0 wt% to 30 wt% of the plasticizer, based on a total weight of the polyvinyl butyral component or optionally the polyvinyl butyral component comprises 10 wt% to 30 wt% of the plasticizer, based on a total weight of the polyvinyl butyral component.

7. The glass reinforced thermoplastic material of claim 6, wherein the plasticizer comprises triethyleneglycol bis (2-ethylhexanoate) tetraethylene glycol di-n-heptanoate, dibutyl sebacate, dihexyl adipate, dioctyl adipate, hexyl cyclohexyl adipate, or a combination thereof.

8. The glass reinforced thermoplastic material of any of the preceding claims, wherein the polyolefin component comprises at least one polyethylene polymer.

9. The glass reinforced thermoplastic material of any of the preceding claims, wherein the polyolefin component comprises at least one polypropylene polymer; optionally the at least one polypropylene polymer is selected from the group consisting of polypropylene homopolymer, polypropylene impact copolymer, and polypropylene random copolymer; or optionally the at least one polypropylene polymer comprises a polypropylene copolymer that includes at least 85% propylene monomeric units, based on a total of monomeric units in the polypropylene copolymer.

10. The glass reinforced thermoplastic material of any one of claims 9, wherein the at least one polypropylene polymer comprises a melt flow index from 1 g/10 min to 100 g/10 min, as measured according to ASTM 1238-20 at 230 °C and 2.16 kg load.

11. The glass reinforced thermoplastic material of any of the preceding claims, wherein the polymer matrix comprises less than or equal to 2.5 wt% mineral fillers, based on a total weight of the polymer matrix.

12. The glass reinforced thermoplastic material of any of the preceding claims, wherein the glass reinforced thermoplastic material includes a surface and the average contact angle of a drop of deionized water on the surface is less than 85°, as measured with a contact angle goniometer, wherein the average contact angle is determined from ten droplets of 8.5 µL volume; and/or wherein the glass reinforced thermoplastic material includes a surface and the average contact angle of a drop of water on the surface is from 70° to 85°, as measured with a contact angle goniometer, wherein the average contact angle is determined from ten droplets of 8.5 µL volume.

13. The glass reinforced thermoplastic material of any of the preceding claims, wherein the glass reinforced thermoplastic material has a flexural strength that is within 30% of a flexural strength of a similar glass reinforced thermoplastic material that is identical except that it does not include the polyvinyl butyral component, as measured according to ASTM D790-17 at 23 °C and a rate of strain 0.05 in/min; and/or wherein the glass reinforced thermoplastic material has a flexural modulus that is within 12% of a flexural modulus of a similar glass reinforced thermoplastic material that is identical except that it does not include the polyvinyl butyral component, as measured according to ASTM D790-17 at 23 °C and a rate of strain 0.05 in/min.

14. A coated article comprising:
a substrate having a surface, and
a coating applied to the surface;
wherein the substrate comprises the glass reinforced thermoplastic material of any of the preceding claims.

15. The coated article of claim 14, wherein the coating comprises a primer, an adhesion promoter, paint, or a combination thereof.

## Patentansprüche

1. Glasverstärktes thermoplastisches Material umfassend:
eine Polymermatrix umfassend, bezogen auf ein Gesamtgewicht der Polymermatrix:
20 Gew.-% bis 50 Gew.-% an einer Polyvinylbutyralkomponente;
45 Gew.-% bis 80 Gew.-% an einer Polyolefinkomponente, wobei die Polyolefinkomponente Polyethylen, Polypropylen oder eine Kombination davon umfasst; und
0,5 Gew.-% bis 9 Gew.-% eines Maleinsäureanhydrid-funktionellen Verträglichkeitsvermittlers, wobei der Maleinsäureanhydrid-funktionelle Verträglichkeitsvermittler Maleinsäureanhydridgepfropftes Polypropylen, Maleinsäureanhydridgepfropftes Polyethylen oder eine Kombination davon umfasst; und
10 Gew.-% bis 40 Gew.-% an einer Glasverstärkung, bezogen auf das Gesamtgewicht des glasverstärkten thermoplastischen Materials.

2. Glasverstärktes thermoplastisches Material nach Anspruch 1, wobei das glasverstärkte thermoplastische Material 60 Gew.-% bis 90 Gew.-% an der Polymermatrix umfasst, bezogen auf ein Gesamtgewicht des glasverstärkten thermoplastischen Materials.

3. Glasverstärktes thermoplastisches Material nach einem der vorhergehenden Ansprüche, wobei die Glasverstärkung mindestens eines von kurzen Glasfasern, langen Glasfasern und Glaskügelchen umfasst und/oder wobei die Glasverstärkung eine Leimungszusammensetzung umfasst, wobei die Leimungszusammensetzung mindestens eines von einem Filmbildner, einem Schmiermittel und einem Kopplungsmittel umfasst; und/oder wobei die Glasverstärkung einen durchschnittlichen Durchmesser von 10 µm bis 17 µm aufweist.

4. Glasverstärktes thermoplastisches Material nach einem der vorhergehenden Ansprüche, wobei die Polymermatrix 1 Gew.-% bis 5 Gew.-% des Maleinsäureanhydrid-funktionellen Verträglichkeitsvermittlers, bezogen auf ein Gesamtgewicht der Polymermatrix, umfasst; und/oder wobei die Polymermatrix 1,5 Gew.-% bis 2,5 Gew.-% des Maleinsäureanhydrid-funktionellen Verträglichkeitsvermittlers, bezogen auf ein Gesamtgewicht der Polymermatrix, umfasst; und/oder wobei der Maleinsäureanhydrid-funktionelle Verträglichkeitsvermittler 0,5 Gew.-% bis 3 Gew.-% Maleinsäureanhydrid-funktionelle Gruppe, bezogen auf ein Gesamtgewicht des Maleinsäureanhydrid-funktionellen Verträglichkeitsvermittlers, beinhaltet.

5. Glasverstärktes thermoplastisches Material nach einem der vorstehenden Ansprüche, wobei die Polymermatrix 22 Gew.-% bis 45 Gew.-% an der Polyvinylbutyralkomponente, bezogen auf ein Gesamtgewicht der Polymermatrix, umfasst; und/oder wobei die Polymermatrix 27 Gew.-% bis 42 Gew.-% an der Polyvinylbutyralkomponente, bezogen auf ein Gesamtgewicht der Polymermatrix, umfasst; und/oder wobei die Polyvinylbutyralkomponente ungebrauchtes Polyvinylbutyral, recyceltes Polyvinylbutyral oder eine Kombination davon umfasst.

6. Glasverstärktes thermoplastisches Material nach einem der vorstehenden Ansprüche, wobei die Polyvinylbutyralkomponente einen Weichmacher umfasst; wobei optional die Polyvinylbutyralkomponente 0 Gew.-% bis 30 Gew.-% des Weichmachers, bezogen auf ein Gesamtgewicht der Polyvinylbutyralkomponente, umfasst, oder optional die Polyvinylbutyralkomponente einen 10 Gew.-% bis 30 Gew.-% des Weichmachers, bezogen auf ein Gesamtgewicht der Polyvinylbutyralkomponente, umfasst.

7. Glasverstärktes thermoplastisches Material nach Anspruch 6, wobei der Weichmacher Triethylenglykol-bis(2-ethylhexanoat), Tetraethylenglykol-di-n-heptanoat, Dibutylsebacat, Dihexyladipat, Dioctyladipat, Hexylcyclohexyladipat oder eine Kombination davon umfasst.

8. Glasverstärktes thermoplastisches Material nach einem der vorstehenden Ansprüche, wobei die Polyolefinkomponente wenigstens ein Polyethylenpolymer umfasst.

9. Glasverstärktes thermoplastisches Material nach einem der vorstehenden Ansprüche, wobei die Polyolefinkomponente wenigstens ein Polypropylenpolymer umfasst; vorzugsweise wobei das wenigstens eine Polypropylenpolymer ausgewählt ist aus der Gruppe bestehend aus Polypropylen-Homopolymer, Polypropylen-Schlagzähigkeitscopolymer und statistischem Polypropylen-Copolymer; oder wobei das wenigstens eine Polypropylenpolymer optional ein Polypropylencopolymer umfasst, das wenigstens 85 % Propylenmonomereinheiten, bezogen auf eine Gesamtmenge von Monomereinheiten in dem Polypropylencopolymer, umfasst.

10. Glasverstärktes thermoplastisches Material nach einem der Ansprüche 9, wobei das mindestens eine Polypropylenpolymer einen Schmelzflussindex von 1 g/10 min bis 100 g/10 min umfasst, gemessen gemäß ASTM 1238-20 bei 230 °C und 2,16 kg Last.

11. Glasverstärktes thermoplastisches Material nach einem der vorstehenden Ansprüche, wobei die Polymermatrix weniger als oder gleich 2,5 Gew.-% an mineralischen Füllstoffen, bezogen auf ein Gesamtgewicht der Polymermatrix, umfasst,

12. Glasverstärktes thermoplastisches Material nach einem der vorhergehenden Ansprüche, wobei das glasverstärkte thermoplastische Material eine Oberfläche beinhaltet und der durchschnittliche Kontaktwinkel eines Tropfens entionisierten Wassers auf der Oberfläche kleiner als 85° beträgt, gemessen mit einem Kontaktwinkelgoniometer, wobei der durchschnittliche Kontaktwinkel aus zehn Tröpfchen mit 8,5 µl Volumen ermittelt wird; und/oder wobei das glasverstärkte thermoplastische Material eine Oberfläche beinhaltet und der durchschnittliche Kontaktwinkel eines Wassertropfens auf der Oberfläche 70° bis 85° beträgt, gemessen mit einem Kontaktwinkelgoniometer, wobei der durchschnittliche Kontaktwinkel aus zehn Tröpfchen von 8,5 µl Volumen ermittelt wird.

13. Glasverstärktes thermoplastisches Material nach einem der vorhergehenden Ansprüche, wobei das glasverstärkte thermoplastische Material eine Biegefestigkeit, die innerhalb von 30 % einer Biegefestigkeit eines ähnlichen glasverstärkten thermoplastischen Materials liegt, das identisch ist, außer dass es die Polyvinylbutyralkomponente nicht beinhaltet, wie gemäß ASTM D790-17 bei 23 °C gemessen, und eine Dehnungsrate von 0,05 in/min aufweist; und/oder wobei das glasverstärkte thermoplastische Material einen Biegemodul, der innerhalb von 12 % eines Biegemoduls eines ähnlichen glasverstärkten thermoplastischen Materials liegt, das identisch ist, außer dass es die Polyvinylbutyralkomponente nicht beinhaltet, wie gemäß ASTM D790-17 bei 23 °C gemessen, und eine Dehnungsrate von 0,05 in/min aufweist.

14. Beschichteter Gegenstand, der Folgendes umfasst:
ein Substrat mit einer Oberfläche, und
eine auf die Oberfläche aufgebrachte Beschichtung;
wobei das Substrat das glasverstärkte thermoplastische Material nach einem der vorstehenden Ansprüche umfasst.

15. Beschichteter Gegenstand nach Anspruch 14, wobei die Beschichtung einen Primer, einen Haftvermittler, eine Farbe oder eine Kombination davon umfasst.

## Revendications

1. Matériau thermoplastique renforcé par du verre comprenant :
une matrice de polymère comprenant, sur la base d'un poids total de la matrice de polymère :
20 % en poids à 50 % en poids d'un composant polyvinylbutyral ;
45 % en poids à 80 % en poids d'un composant polyoléfine, le composant polyoléfine comprenant du polyéthylène, du polypropylène, ou une combinaison de ceux-ci ; et
0,5 % en poids à 9 % en poids d'un agent compatibilisant à fonction anhydride maléique, l'agent compatibilisant à fonction anhydride maléique comprenant un polypropylène greffé avec de l'anhydride maléique, un polyéthylène greffé avec de l'anhydride maléique, ou une combinaison de ceux-ci ; et
10 % à 40 % en poids d'un renfort de verre, par rapport à un poids total du matériau thermoplastique renforcé par du verre.

2. Matériau thermoplastique renforcé par du verre selon la revendication 1, dans lequel le matériau thermoplastique renforcé par du verre comprend 60 % en poids à 90 % en poids de la matrice de polymère, sur la base du poids total du matériau thermoplastique renforcé par du verre.

3. Matériau thermoplastique renforcé par du verre selon l'une quelconque des revendications précédentes, dans lequel le renfort de verre comprend au moins l'un parmi des fibres de verre courtes, des fibres de verre longues et des billes de verre, et/ou dans lequel le renfort de verre comprend une composition d'encollage, la composition d'encollage comprenant au moins l'un parmi un agent filmogène, un lubrifiant et un agent de couplage ; et/ou dans lequel le renfort de verre a un diamètre moyen de 10 µm à 17 µm.

4. Matériau thermoplastique renforcé par du verre selon l'une quelconque des revendications précédentes, dans lequel la matrice de polymère comprend 1 % en poids à 5 % en poids de l'agent compatibilisant à fonction anhydride maléique, sur la base du poids total de la matrice de polymère ; et/ou dans lequel la matrice de polymère comprend 1,5 % en poids à 2,5 % en poids de l'agent compatibilisant à fonction anhydride maléique, sur la base du poids total de la matrice de polymère ; et/ou dans lequel l'agent compatibilisant à fonction anhydride maléique comprend 0,5 % en poids à 3 % en poids de groupe à fonction anhydride maléique, sur la base du poids total de l'agent compatibilisant à fonction anhydride maléique.

5. Matériau thermoplastique renforcé par du verre selon l'une quelconque des revendications précédentes, dans lequel la matrice de polymère comprend 22 % en poids à 45 % en poids du composants polyvinylbutyral, par rapport au poids total de la matrice de polymère ; et/ou dans lequel la matrice de polymère comprend 27 % en poids à 42 % en poids du composant polyvinylbutyral, par rapport au poids total de la matrice de polymère ; et/ou dans lequel le composant polyvinylbutyral comprend un polyvinylbutyral vierge, un polyvinylbutyral recyclé ou une combinaison de ceux-ci.

6. Matériau thermoplastique renforcé par du verre selon l'une quelconque des revendications précédentes, dans lequel le composant polyvinylbutyral comprend un plastifiant ; éventuellement le composant polyvinylbutyral comprend 0 % en poids à 30 % en poids du plastifiant, par rapport à un poids total du composant polyvinylbutyral ou éventuellement le composant polyvinylbutyral comprend 10 % en poids à 30 % en poids du plastifiant, par rapport à un poids total du composant polyvinylbutyral.

7. Matériau thermoplastique renforcé par du verre selon la revendication 6, dans lequel le plastifiant comprend du bis(2-éthylhexanoate) de triéthylèneglycol, du di-n-heptanoate de tétraéthylèneglycol, du sébacate de dibutyle, de l'adipate de dihexyle, de l'adipate de dioctyle, de l'adipate d'hexyle et de cyclohexyle, ou une combinaison de ceux-ci.

8. Matériau thermoplastique renforcé par du verre selon l'une quelconque des revendications précédentes, dans lequel le composant polyoléfine comprend au moins un polymère de polyéthylène.

9. Matériau thermoplastique renforcé par du verre selon l'une quelconque des revendications précédentes, dans lequel le composant polyoléfine comprend au moins un polymère de polypropylène ; éventuellement l'au moins un polymère de polypropylène est choisi dans le groupe constitué par un homopolymère de polypropylène, un copolymère de résistance aux chocs de polypropylène et un copolymère statistique de polypropylène ; ou éventuellement l'au moins un polymère de polypropylène comprend un copolymère de polypropylène qui comprend au moins 85 % d'unités monomériques de propylène, sur la base d'un total d'unités monomériques dans le copolymère de polypropylène.

10. Matériau thermoplastique renforcé par du verre selon l'une quelconque des revendications 9, dans lequel l'au moins un polymère de polypropylène comprend un indice de fluidité à chaud de 1 g/10 min à 100 g/10 min, tel que mesuré selon la norme ASTM 1238-20 à 230 °C et une charge de 2,16 kg.

11. Matériau thermoplastique renforcé par du verre selon l'une quelconque des revendications précédentes, dans lequel la matrice de polymère comprend une quantité inférieure ou égale à 2,5 % en poids de charges minérales, sur la base du poids total de la matrice de polymère.

12. Matériau thermoplastique renforcé par du verre selon l'une quelconque des revendications précédentes, dans lequel le matériau thermoplastique renforcé par du verre comprend une surface et l'angle moyen de contact d'une goutte d'eau désionisée sur la surface est inférieur à 85°, tel que mesuré avec un goniomètre d'angle de contact, dans lequel l'angle moyen de contact est déterminé à partir de dix gouttelettes de 8,5 µL en volume ; et/ou dans lequel le matériau thermoplastique renforcé par du verre comprend une surface et l'angle moyen de contact d'une goutte d'eau sur la surface est de 70° à 85°, tel que mesuré avec un goniomètre d'angle de contact, l'angle moyen de contact étant déterminé à partir de dix gouttelettes de 8,5 µL en volume.

13. Matériau thermoplastique renforcé par du verre selon l'une quelconque des revendications précédentes, dans lequel le matériau thermoplastique renforcé par du verre a une résistance à la flexion qui est dans les 30 % d'une résistance à la flexion d'un matériau thermoplastique renforcé par du verre similaire qui est identique sauf qu'il ne comprend pas le composant polyvinylbutyral, telle que mesurée selon la norme ASTM D790-17 à 23 °C et une vitesse de déformation de 0,05 in/min ; et/ou dans lequel le matériau thermoplastique renforcé par du verre a un module de flexion qui est dans les 12 % d'un module de flexion d'un matériau thermoplastique renforcé par du verre similaire qui est identique à l'exception du fait qu'il ne comprend pas le composant polyvinylbutyral, tel que mesuré selon la norme ASTM D790-17 à 23 °C et une vitesse de déformation de 0,05 in/min.

14. Article revêtu comprenant :
un substrat ayant une surface, et
un revêtement appliqué sur la surface ;
dans lequel le substrat comprend le matériau thermoplastique renforcé par du verre selon l'une quelconque des revendications précédentes.

15. Article revêtu selon la revendication 14, dans lequel le revêtement comprend un apprêt, un promoteur d'adhérence, une peinture ou une combinaison de ceux-ci.
